# EUROPÄISCHE PATENTSCHRIFT

(11) **EP 3 277 577 B1**
(45) Veröffentlichungstag und Bekanntmachung des Hinweises auf die Patenterteilung: **15.01.2020**
(21) Anmeldenummer: 16712329.8
(22) Anmeldetag: 29.03.2016
(51) Int. Cl.: B64C 1/18, B64D 11/00, B64C 1/00

(54) **VORRICHTUNG ZUM AUSGLEICHEN EINER DRUCKDIFFERENZ FÜR EIN LUFTFAHRZEUG**
DEVICE FOR EQUALIZING A PRESSURE DIFFERENCE FOR AN AIRCRAFT
DISPOSITIF PERMETTANT DE COMPENSER UNE DIFFÉRENCE DE PRESSION POUR UN AÉRONEF

(30) Priorität: 01.04.2015 DE 102015205939
(43) Veröffentlichungstag der Anmeldung: 07.02.2018
(73) Patentinhaber: Lufthansa Technik AG, 22335 Hamburg (DE)
(72) Erfinder: PFINGSTEN, Kai-Christoph, 20251 Hamburg (DE); REIFFERSCHEID, Moritz, 21483 Basedow (DE)
(74) Vertreter: Müller Verweyen
(86) Internationale Anmeldenummer: PCT/EP2016/056774
(87) Internationale Veröffentlichungsnummer: WO 2016/156298

(56) Entgegenhaltungen:
- AT-A4- 510 153
- DE-A1- 4 103 013
- DE-A1- 10 031 714
- DE-A1-102007 011 627
- DE-A1-102009 012 015
- DE-A1-102010 045 197

## Beschreibung

Die vorliegende Erfindung betrifft eine Vorrichtung zum Ausgleichen einer Druckdifferenz für ein Luftfahrzeug mit den Merkmalen des Oberbegriffs von Anspruch 1.

Insbesondere im Bereich des VIP-Ausbaus von Passagierflugzeugen ist es üblich, im Verhältnis zum gesamten Passagiervolumen kleine Passagierabteile, beispielsweise als Konferenz-, Ruhe- oder Medienraum, abzutrennen. Weiter werden bei solchen Passagiermaschinen häufig auch Aufbewahrungseinrichtungen, wie beispielsweise Möbelstücke, eingebaut, die im Verhältnis zum Passagierabteil, in dem sie eingebaut sind, ein kleineres Raumvolumen aufweisen.

Im Falle einer Beschädigung der Bordwand des Passagierflugzeugs im Bereich eines solchen Passagierabteils führt die plötzliche Dekompression der Druckkabine, die nachfolgend als ein erster Raum bezeichnet wird, zu einem plötzlichen Druckabfall in dem ersten Raum. Ein zweiter Raum, der an den ersten Raum angrenzt und durch wenigstens eine Trennwand von dem ersten Raum abgetrennt ist, kann diesen Druckabfall aber nur zeitverzögert vollziehen, so dass zumindest für einen kurzen Zeitraum eine Druckdifferenz zwischen dem ersten und dem zweiten Raum besteht, die an der Trennwand anliegt. Die Trennwand kann dabei beispielsweise durch eine Raumabtrennung oder eine Außenwand eines Möbelstücks gebildet sein. Diese hohen Druckdifferenzen können erhebliche und gefährliche Folgeschäden verursachen, nämlich dann, wenn es durch die Druckdifferenz zu einem Zerbersten der Trennwand kommt und sich infolgedessen Teile der Trennwand unkontrolliert durch die Passagierkabine bewegen.

Um dies zu vermeiden, ist es bekannt, ständig geöffnete, oder sich aufgrund der Druckdifferenz öffnende Strömungsöffnungen zwischen dem ersten und dem zweiten Raum vorzusehen. Im letztgenannten Fall ist die Strömungsöffnung im Normalbetrieb, d.h. solange eine vorbestimmte kritische Druckdifferenz nicht überschritten ist, durch eine Dekompressionsklappe verschlossen. Die Befestigung der Dekompressionsklappe an der Trennwand ist derart ausgeführt, dass die Strömungsöffnung bei Überschreiten der vorbestimmten, kritischen Druckdifferenz zwischen dem ersten und dem zweiten Raum freigegeben wird. Damit die sich aus der Strömungsöffnung lösende Dekompressionsklappe keine Verletzungen der Passagiere durch die plötzliche Lösebewegung im Dekompressionsfall herbeiführt, ist die Dekompressionsklappe durch eine Sicherungseinrichtung mit einer flugzeugfesten Struktur, beispielsweise mit der Trennwand selbst, verbunden. Weiter verhindert die Sicherungseinrichtung eine unkontrollierte Bewegung bei einem ungewollten Lösen der Dekompressionsklappe, beispielsweise durch hohe Beschleunigungen bei Turbulenzen oder während einer Notlandung.

Die aus dem Stand der Technik bekannten Sicherungseinrichtungen werden häufig durch Stahlseile gebildet. Dies ist notwendig, um die hohen Kräfte während der Lösebewegung aufnehmen zu können. Damit die Dekompressionsklappe während der Lösebewegung zuverlässig gehalten werden kann, müssen insbesondere die Verbindungsmittel der Sicherungseinrichtung an der flugzeugfesten Struktur und an der Dekompressionsklappe für extrem hohe Kräfte ausgelegt werden. Dies hat ein erhöhtes Gewicht zur Folge und ist teilweise nicht mit dem innenarchitektonischen Nutzungs- und Designkonzept dieser Abteile, insbesondere nach VIP-Standard, nicht vereinbar.

Die DE 10 2007 011 627 A1 beschreibt eine derartige Innenverkleidung für ein Luftfahrzeug. Dabei trennt die Innenverkleidung einen Zwischenraum druckdicht von einem Innenraum. Die Innenverkleidung ist durch Verkleidungsplatten gebildet bei denen mindestens eine Verkleidungsplatte einen selbsttätigen Druckausgleich ermöglicht. Zu diesem Zweck sind Halterungen mit Sollbruchstellen ausgestattet, die insbesondere durch Kunststoffmuttern gebildet sind, deren Gewinde beim Überschreiten einer Grenzbelastbarkeit abreißt. Zusätzlich sind die Verkleidungsplatten durch Seile gehalten, die durch eine Seilklemme geführt sind, wodurch eine Sicherungseinrichtung bei geöffneter Druckausgleichsplatte gebildet ist.

Die Aufgabe der Erfindung besteht darin, bei einer plötzlichen Dekompression eine kontrolliertere und zuverlässigere Lösebewegung der Dekompressionsklappe zu ermöglichen.

Die Aufgabe wird durch die Merkmale des unabhängigen Anspruchs gelöst.

Gemäß dem Grundgedanken der Erfindung wird eine Vorrichtung zum Ausgleichen einer Druckdifferenz für ein Luftfahrzeug vorgeschlagen, umfassend eine flächige, flugzeugfeste Trennwand, die einen ersten Raum strömungstechnisch von einem zweiten Raum trennt, wobei die Trennwand eine den ersten und zweiten Raum strömungstechnisch verbindende Strömungsöffnung aufweist, und eine die Strömungsöffnung verschließende Dekompressionsklappe, wobei eine Befestigung der Dekompressionsklappe an der Trennwand dazu eingerichtet ist, eine Lösebewegung der Dekompressionsklappe bei Überschreiten eines vorbestimmten Druckgradienten zwischen dem ersten und zweiten Raum freizugegeben, so dass eine strömungstechnische Verbindung zwischen dem ersten und dem zweiten Raum besteht, wobei eine die Lösebewegung der Dekompressionsklappe begrenzende Sicherungseinrichtung vorgesehen ist, wobei die Sicherungseinrichtung eine Energieabsorptionseinrichtung umfasst.

Die Energieabsorptionseinrichtung bewirkt, dass die maximal auf die Sicherungseinrichtung wirkende Beanspruchung reduziert werden kann. Bei einer ausreichend großen Druckdifferenz zwischen dem ersten und dem zweiten Raum wird die Dekompressionsklappe schlagartig aus der Befestigung an der Trennwand gerissen und erfährt somit eine sehr große Beschleunigung. Damit geht der Effekt einher, dass die Strömungsöffnung ausreichend schnell geöffnet werden und durch das Überströmen der Luft von dem Raum höheren Drucks in den Raum geringeren Drucks überströmen kann. So kann ein ausreichend schneller Druckausgleich zwischen den beiden Räumen vollzogen werden. Durch die große Beschleunigung weist die Dekompressionsklappe auch eine hohe kinetische Energie auf, die durch die Sicherungseinrichtung wieder abgebaut werden muss.

Durch die Energieabsorptionseinrichtung wird die Dekompressionsklappe nicht schlagartig in einer Endposition abgebremst, sondern die kinetische Energie kontrolliert absorbiert und an die Umgebung abgegeben. Vorzugsweise ist die Energieabsorptionseinrichtung dazu eingerichtet, die kinetische Energie in thermische und/oder plastische Energie umzuwandeln; die Energieabsorptionseinrichtung wirkt damit kraftbegrenzend. Vorzugsweise ist die Energieabsorptionseinrichtung dazu eingerichtet, einen Anteil von mehr als 10 % der kinetischen Energie zu absorbieren, weiter vorzugsweise von mehr als 50 % und insbesondere vorzugsweise von mehr als 80 %. Dieser Anteil der kinetischen Energie wird durch die Energieabsorptionseinrichtung gezielt, beispielsweise durch eine kontrollierte Bewegung, absorbiert. Eine Sicherungseinrichtung, die ausschließlich durch ein reines Halteelement, wie z.B. durch ein Stahlseil oder ein Gurtband, gebildet ist, welches nicht speziell zur Energieabsorption ausgebildet ist, ist im Sinne dieser Anmeldung nicht als Energieabsorptionseinrichtung zu verstehen.

Die Energieabsorptionseinrichtung bewirkt damit ein kontrolliertes Abbremsen der Dekompressionsklappe, so dass ein schlagartiger Abbremsvorgang durch die Sicherungseinrichtung in einer Endposition verhindert werden kann. Es werden so die Beanspruchungen auf ein erstes Verbindungsmittel, das die Sicherungseinrichtung mit einer flugzeugfesten Struktur verbindet, sowie auf ein zweites Verbindungsmittel, das die Sicherungseinrichtung mit der Dekompressionsklappe verbindet, reduziert. Ferner wird die Beanspruchung der Sicherungseinrichtung selbst reduziert, was insgesamt eine erhöhte Systemzuverlässigkeit zur Folge hat. Die Verbindungsmittel und die Sicherungseinrichtung selbst können so auch für geringere Beanspruchungen ausgelegt werden, was eine Kosten- und Gewichtsersparnis bedeutet.

Weiter kann es durch die erfindungsgemäße Sicherungseinrichtung mit einer Energieabsorptionseinrichtung erreicht werden, dass die Dekompressionsklappe die Endposition mit einer geringeren Geschwindigkeit erreicht und damit die Verletzungsgefahr für Passagiere reduziert wird.

Als Energieabsorptionseinrichtung kommen beispielsweise plastische oder elastische Deformationselemente in Frage. Alternativ kann die Energieabsorption auch durch die zumindest teilweise Zerstörung eines Deformationselements umgesetzt werden. Bevorzugt arbeitet das Energieabsorptionselement irreversibel.

Vorzugsweise ist die Sicherungseinrichtung dazu eingerichtet, dass die Energieabsorptionseinrichtung erst dann energieabsorbierend wirkt, wenn die Dekompressionsklappe wenigstens einen Strömungsquerschnitt freigibt, der zumindest 10 % der Fläche der Strömungsöffnung aufweist. Vorzugsweise kann die Energieabsorptionseinrichtung erst dann energieabsorbierend wirken, wenn der Strömungsquerschnitt mehr als 30 % der Fläche der Strömungsöffnung aufweist, weiter vorzugsweise mehr als 50 %. Durch diese Ausführung wird gewährleistet, dass die Dekompressionsklappe ihre eigentliche Funktion, nämlich einen schnellen Strömungsausgleich zwischen dem ersten und dem zweiten Raum sicherzustellen, ohne Einschränkungen erfüllen kann. Erst wenn die Dekompressionsklappe die Strömungsöffnung ausreichend freigegeben hat, setzt die Wirkung der Energieabsorptionseinrichtung ein, was eine negative Beschleunigung der Dekompressionsklappe zur Folge hat. Durch diese Ausführung der Sicherungseinrichtung wird eine ausreichend große Energieabsorption erreicht, ohne negativ in die eigentliche Dekompressionsfunktion einzugreifen.

Es wird erfindungsgemäß vorgeschlagen, dass die Sicherungseinrichtung ein Gurtband umfasst. Das Gurtband hat ein geringes Gewicht und ist dafür geeignet, hohe Kräfte, insbesondere hohe Zugkräfte, aufzunehmen.

Es wird weiter erfindungsgemäß vorgeschlagen, dass die Energieabsorptionsvorrichtung durch eine Schlaufe gebildet ist, die durch ein Haltemittel gehalten ist, wobei das Haltemittel dazu eingerichtet ist, die Schlaufe bei einem Überschreiten einer vordefinierten Zugkraft an dem Gurtband freizugeben. Es kann dadurch das Gurtband, das das Grundelement der Sicherungseinrichtung bildet, gleichzeitig als Bestandteil der Energieabsorptionseinrichtung verwendet werden. Vorzugsweise wird die Schlaufe dabei durch zwei aufeinanderliegende Lagen des Gurtbandes gebildet, die über das Haltemittel miteinander verbunden sind. Alternativ kann die Schlaufe aber auch als Gurtbandlose ausgeführt sein, so dass die zwei Lagen des Gurtbandes nicht unmittelbar aneinander anliegen.

Ferner wird vorgeschlagen, dass das Haltemittel dazu eingerichtet ist, während der Lösebewegung Energie zu absorbieren. Die Verkürzung des Gurtbandes durch die Schlaufe kann damit nur dadurch aufgehoben werden, indem das Haltemittel die Schlaufe freigibt. Damit während der Freigabe der Schlaufe Energie absorbiert werden kann, ist das Haltemittel derart eingerichtet, dass es einen Teil der auf das Gurtband wirkenden Energie dissipieren bzw. absorbieren kann. Es kann so durch das die Schlaufe schaffende Haltemittel eine kostengünstige und zuverlässige Energieabsorptionseinrichtung ohne zusätzliche Energieabsorptionsmittel geschaffen werden. Ferner kann das Absorptionsverhalten durch die Ausgestaltung des Haltemittels definiert werden.

Vorzugsweise ist das Haltemittel durch eine Reißnaht gebildet, die zum Schaffen der Schlaufe wenigstens zwei Abschnitte des Gurtbandes miteinander verbindet. Weiter vorzugsweise handelt es sich bei den zwei Abschnitten des Gurtbandes um zwei Lagen des Gurtbandes, die plan aufeinanderliegen. Die Reißnaht bildet eine fertigungstechnisch besonders einfache Möglichkeit, ein energieabsorbierendes Haltemittel zu bilden. Dabei ist die Reißnaht so ausgeführt, dass sie bei Überschreiten einer vorbestimmten Zugkraft an dem Gurtband in Längsrichtung aufreißt und damit die Schlaufe immer weiter freigibt. Vorzugsweise ist die Reißnaht mit einer Reißfestigkeit zwischen 10.000 und 20.000 cN ausgeführt, welche z.B. durch einen Faden aus Polyester mit einer Feinheit von vorzugsweise 1.000 bis 1.500 dtex x 2 erreicht wird. Durch entsprechende Auslegung der Reißnaht wird sichergestellt, dass bei der Lösebewegung der Faden als Opferfaden dient, d.h. nur der Faden wird zerstört und nicht das Gurtband selbst. Das ist insbesondere deshalb von Bedeutung, weil das Gurtband die Dekompressionsklappe in einer Endposition halten muss, also dann, wenn die Energieabsorptionseinrichtung nicht mehr energieabsorbierend wirkt.

In einer bevorzugten Ausführungsform verbindet die Reißnaht die Abschnitte über eine Erstreckung längs des Gurtbandes miteinander. Durch die Erstreckung der Reißnaht in Längsrichtung des Gurtbandes kann die Energieabsorption über einen größeren Anteil der Lösebewegung erfolgen und damit auch mehr Energie dissipiert bzw. absorbiert werden.

Weiter ist es bevorzugt, dass der Verlauf der Reißnaht über ihre Erstreckung längs des Gurtbandes zur Steuerung der Energieabsorptionscharakteristik individuell ausgelegt ist. Unter einer individuellen Auslegung ist im Kontext dieser Anmeldung eine Auslegung zu verstehen, die den zeitlich veränderlichen Energieabsorptionsanforderungen während der Lösebewegung gerecht wird. So könnte beispielsweise eine Anforderung sein, dass sich der Anteil der Energieabsorption mit fortschreitender Lösebewegung erhöhen soll. Damit kann der Anteil der Energieabsorption über die Lösebewegung hinweg gesteuert werden und somit auch die Beanspruchung der Sicherungseinrichtung.

Vorzugsweise weist eine Erstreckung der Reißnaht in Längsrichtung des Gurtbandes einen geringeren Anteil auf als in eine Richtung orthogonal zu der Längsrichtung des Gurtbandes. Während des Absorptionsvorgangs, der bei einer Beanspruchung des Gurtbandes in Längsrichtung stattfindet, muss eine mindestens so lange Naht in eine Querrichtung aufreißen wie in Längsrichtung, wodurch ein im Vergleich zu einer überwiegend in Längsrichtung ausgerichteten Reißnaht ein erhöhter Anteil der kinetischen Energie absorbiert werden kann. Vorzugsweise ist die Reißnaht z-förmig ausgeführt.

Die Erfindung wird im Folgenden anhand bevorzugter Ausführungsformen unter Bezugnahme auf die beigefügten Figuren erläutert. Dabei zeigt
- Fig. 1: eine schematische Darstellung einer erfindungsgemäßen Sicherungseinrichtung mit einer Energieabsorptionseinrichtung in einem normalen Zustand;
- Fig. 2: eine schematische Darstellung einer erfindungsgemäßen Sicherungseinrichtung mit einer Energieabsorptionseinrichtung kurz nach einem plötzlichen Druckabfall;
- Fig. 3:: eine schematische Schnittansicht einer Reißnaht;
- Fig. 4:: zwei verschiedene Reißnahtgeometrien in einer Draufsicht;
- Fig. 5:: ein Diagramm des zeitlichen Kraftverlaufs bei einer ersten Reißnahtgeometrie; und
- Fig. 6:: ein Diagramm des zeitlichen Kraftverlaufs bei einer zweiten Reißnahtgeometrie.

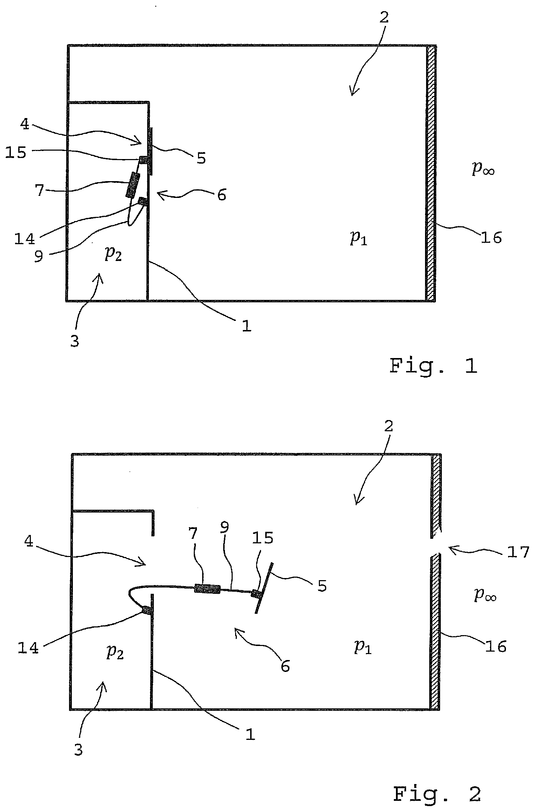

Fig. 1 zeigt schematisch und beispielhaft einen Aufbau eines Passagierflugzeugs mit einem VIP-Ausbau. Dabei ist ein erster Raum 2 vorgesehen, der beispielsweise durch ein Passagierabteil gebildet ist. An den ersten Raum 2 grenzt ein zweiter Raum 3, der durch wenigstens eine Trennwand 1 von dem ersten Raum 2 getrennt ist. Der zweite Raum 3 wird in diesem Ausführungsbeispiel vorzugsweise durch einen Aufbewahrungsraum gebildet, weiter vorzugsweise durch die Umwandung eines Möbelstücks. Auf der rechten Seite der Fig. 1 ist eine Bordwand 16 dargestellt, die den ersten Raum 2 von einer Umgebung trennt. In der Fig. 1 ist das Raumvolumen des ersten Raums 2 größer als das Raumvolumen des zweiten Raums 3; dem Offenbarungsgehalt dieser Anmeldung sind jedoch ausdrücklich auch andere Verhältnisse der Raumvolumina hinzuzurechnen.

Für die physikalischen Verhältnisse in Fig. 1 wird angenommen, dass sich das Passagierflugzeug in Reiseflughöhe befindet, so dass der Umgebungsdruck p_{∞} geringer ist als die Drücke p₁ und p₂ in dem ersten und in dem zweiten Raum 2 und 3. Es kann weiter angenommen werden, dass sich aufgrund von minimalen Strömungsöffnungen, die beispielsweise durch Spalte gebildet sind, zwischen den Räumen 2 und 3 ein stationärer Zustand mit annähernd identischen Drücken p₁ und p₂ eingestellt hat.

Ferner ist in Fig. 1 zu erkennen, dass eine Strömungsöffnung 4 durch eine Dekompressionsklappe 5 verschlossen ist, so dass über die Strömungsöffnung 4 keine strömungstechnische Verbindung zwischen dem ersten und dem zweiten Raum 2 und 3 vorhanden ist. Die Dekompressionsklappe 5 ist über ein zweites Verbindungsmittel 15 mit einer Sicherungseinrichtung 6 verbunden, wobei diese wiederum über ein erstes Verbindungsmittel 14 mit einer flugzeugfesten Struktur, beispielsweise mit der Trennwand 1, verbunden ist. Weiter ist eine Energieabsorptionseinrichtung 7 als Teil der Sicherungseinrichtung 6 dargestellt, wobei die Sicherungseinrichtung 6 vom Passagierabteil nicht sichtbar in dem ersten Raum 2 angeordnet ist.

Fig. 2 zeigt grundsätzlich die gleiche Anordnung wie Fig. 1, wobei hier der Zustand kurz nach einem plötzlichen Druckabfall eines Drucks p₁ in dem ersten Raum 2 dargestellt ist. Der Druckabfall des Drucks p₁ wird durch eine Beschädigung 17 in der Bordwand 16 hervorgerufen, so dass sich innerhalb kürzester Zeit der Druck p₁ in dem ersten Raum 2 dem Umgebungsdruck p_{∞} angleicht. Zu diesem Zeitpunkt ist, wie in Fig. 1 gezeigt, durch die Trennwand 1 und die durch die Dekompressionsklappe 5 noch verschlossene Strömungsöffnung 4 der zweite Raum 3 strömungstechnisch weitestgehend von dem ersten Raum 2 getrennt, so dass der Druck p₂ zumindest für einen kurzen Zeitraum unmittelbar nach dem Druckabfall in dem ersten Raum 2 als konstant angenommen werden kann; der Druck p₂ ist somit größer als der Druck p₁.

Sobald ein kritischer Differenzdruck |p₂-p₁| überschritten ist, wird die Befestigung zum Halten der Dekompressionsklappe 5 in der Trennwand 1 freigegeben, so dass sich die Dekompressionsklappe 5 schlagartig löst und eine Lösebewegung in den ersten Raum 2 hinein vollzieht, siehe Fig. 2.

Wie ebenfalls in Fig. 2 dargestellt, ist die Lösebewegung durch die Sicherungseinrichtung 6 begrenzt, so dass die Dekompressionsklappe 5 nur bis in eine in der Fig. 2 dargestellte Endposition gelangen kann. Die Sicherungseinrichtung 6 umfasst dabei ein Gurtband 9 sowie die Energieabsorptionseinrichtung 7.

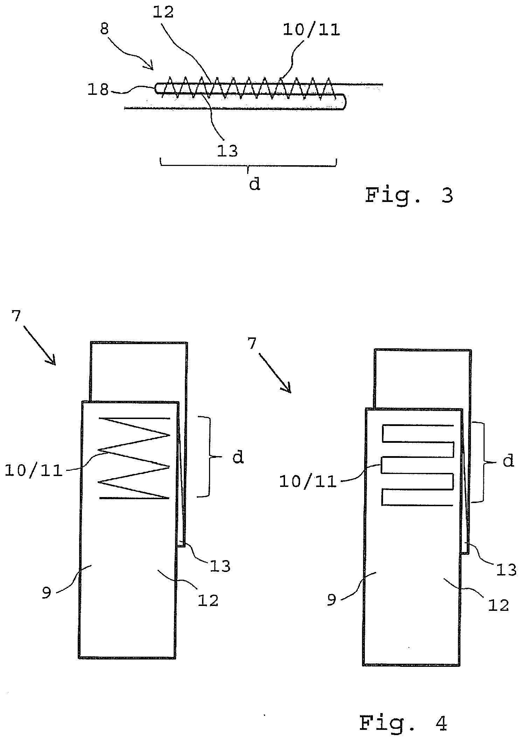

Fig. 3 zeigt eine Schnittansicht einer Energieabsorptionseinrichtung 7, die durch eine Schlaufe 8 und ein Haltemittel 10 gebildet ist. Die Schlaufe 8 wird dabei durch einen ersten und zweiten Abschnitt 12 und 13 des Gurtbandes 9 gebildet, die plan aufeinanderliegen. Um ein ungewolltes Lösen der Schlaufe 8 zu verhindern, ist das Haltemittel 10 vorgesehen, das hier vorzugsweise durch eine Reißnaht 11 gebildet ist. Dabei wird die Reißnaht 11 vorzugsweise durch einen Opferfaden gebildet, der bei Überschreiten einer vordefinierten Beanspruchung des Gurtbandes 9 aufreißt bzw. zerstört wird. Durch das Aufreißen des Fadens bzw. durch dessen Zerstörung während des Aufreißvorgangs und die damit einhergehende Freigabe der Schlaufe kommt es zu einer Energieabsorption. Vorzugsweise wird der die Reißnaht 11 bildende Faden durch einen hochfesten multifilamenten Polyesterfaden gebildet. Weiter vorzugsweise weist dieser eine Feinheit zwischen 1.000 und 1.500 dtex x 2 sowie eine Reißfestigkeit zwischen 10.000 und 20.000 cN auf.

Die Reißnaht 11 erstreckt sich vorzugsweise in Längsrichtung des Gurtbandes 9 über eine Strecke d, so dass durch den Aufreißvorgang der Schlaufe 8 über ein längeres Zeitintervall eine größere Energieabsorption erreicht werden kann. Vorzugsweise beträgt die Strecke d wenigstens 2 cm, weiter vorzugsweise wenigstens 5 cm und insbesondere vorzugsweise wenigstens 7 cm.

Vorzugsweise reicht die Reißnaht 11 bis zu einer Umschlagekante 18, an die der erste Abschnitt 12 an den zweiten Abschnitt 13 angrenzt. Das bietet den Vorteil, dass die Energieabsorption bei der Lösebewegung bis unmittelbar vor Erreichen der Endposition erreicht werden kann. Durch die Energieabsorption wird auch eine Verringerung der Geschwindigkeit der Lösebewegung erreicht, wodurch die negative Beschleunigung, die die Dekompressionsklappe 5 beim Erreichen der Endposition erfährt, abgeschwächt werden kann. Damit wird auch das erste und das zweite Verbindungsmittel 14 und 15 sowie das Gurtband 9 weniger stark beansprucht.

In Fig. 4 werden exemplarisch zwei verschiedene Reißnahtgeometrien gezeigt. Beiden Reißnahtgeometrien ist gemeinsam, dass deren Anteil in Längsrichtung geringer ist als in Querrichtung. Das Gurtband 9 wird an seinen Enden durch eine Zugkraft beansprucht, also in Längsrichtung. Durch den Anteil der Reißnaht 11 in Querrichtung kann die Länge der Reißnaht 11 vergrößert werden und damit auch die Energieabsorption verbessert werden.

In Fig. 4, links, ist die Reißnaht 11 in einer typischen Z-Form dargestellt. Fig. 4, rechts, zeigt dagegen eine Reißnahtgeometrie, bei der die Reißnaht 11 aus Abschnitten gebildet ist, die orthogonal zu der Längsachse ausgerichtet sind und jeweils wechselseitig an den Kanten durch kürzere Teilabschnitte in Längsrichtung miteinander verbunden sind. In einer weiteren Ausführungsform können diese Teilabschnitte aber auch entfallen. Weiter vorzugsweise sind aber auch Geometrien denkbar, die eine X-förmige Grundform aufweisen. Der Offenbarungsgehalt soll jedoch ausdrücklich nicht auf diese beiden Reißnahtgeometrien beschränkt sein.

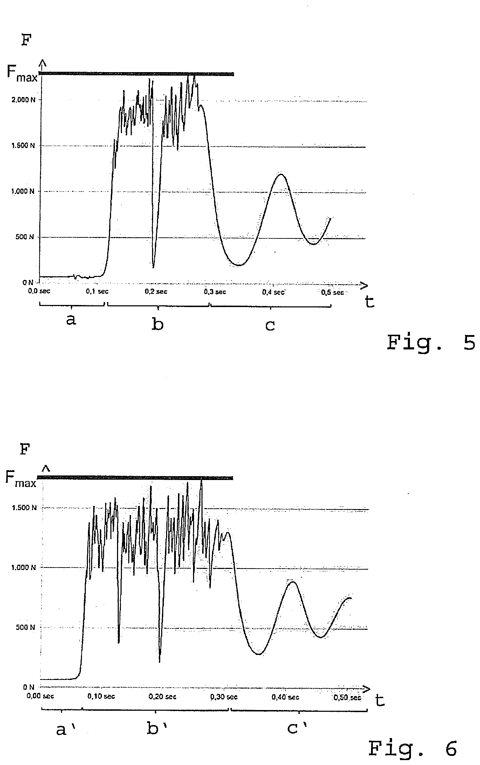

In den Fig. 5 und Fig. 6 sind zwei verschiedene Kraftverläufe über die Zeit aufgetragen. Es handelt sich dabei jeweils um die Zugkraft, die während der Lösebewegung von der Dekompressionsklappe 5 über das Gurtband 9 auf das erste Verbindungsmittel 14 übertragen wird.

Fig. 5 zeigt dabei den Kraftverlauf für eine Energieabsorptionseinrichtung 7 mit einer geringeren Energieabsorption als bei der Reißnahtgeometrie, deren Kraftverlauf in Fig. 6 gezeigt ist. Eine größere Energieabsorption, siehe Diagramm in Fig. 6, kann beispielsweise durch eine Parallelschaltung zweier Energieabsorptionseinrichtungen 7 erreicht werden. Das kann beispielsweise dann vorteilhaft sein, wenn aufgrund baulicher Vorgaben das Gurtband 9 nur durch einen schmalen Spalt geführt werden kann. In diesem Fall ist es vorteilhaft, ein breiteres Gurtband 9 durch zwei schmale Gurtbänder mit jeweils einer Energieabsorptionseinrichtung 7 vorzusehen.

In der Fig. 5 ist in einem ersten Zeitintervall a ein Kraftverlauf dargestellt, der annähernd gleich null ist. In diesem Zeitintervall a kann sich die Dekompressionsklappe 5 frei lösen, ohne von der Sicherungseinrichtung 6 zurückgehalten zu werden; d.h. die Sicherungseinrichtung 6 greift in diesem Fall nicht ein, so dass die schlagartige Lösebewegung der Dekompressionsklappe 5 nicht gebremst oder in sonstiger Weise störend beeinflusst wird. Das ist erforderlich, um die Druckdifferenz |p₂-p₁| zum Verhindern des Zerberstens der Trennwand 1 möglichst schnell abzubauen und stellt damit einen wesentlichen sicherheitsrelevanten Aspekt dar. Vorzugsweise ist die Sicherungseinrichtung 6 derart eingerichtet, dass das im Zeitintervall b dargestellte Verhalten erst dann vollzogen wird, wenn durch die Dekompressionsklappe 5 ein Strömungsquerschnitt freigegeben ist, der wenigstens 10 % der Fläche der Strömungsöffnung 4 ausmacht, weiter vorzugsweise 30 % und insbesondere vorzugsweise 50 %. Unter dem Strömungsquerschnitt ist im Kontext dieser Anmeldung die Fläche zu verstehen, die der Luftstrom ungehindert durchströmen kann, und zwar ohne dass anschließend von der sich lösenden Dekompressionsklappe 5 ein dem Luftmassenstrom entgegenwirkender Strömungswiderstand bewirkt wird.

Das Zeitintervall b beginnt, wenn sich die Dekompressionsklappe 5 während der Lösebewegung so weit von der Trennwand 1 entfernt hat, dass sie von der Sicherungseinrichtung 6 zurückgehalten wird, wobei zu Beginn des Zeitintervalls b die Sicherungseinrichtung 6 noch durch die von dem Haltemittel 10 gehaltene Schlaufe 8 verkürzt ist. Es ist zu erkennen, dass zu Beginn des Zeitintervalls b die Kraft rapide bis zu einem Wert von etwa 1,5 kN ansteigt und kurz darauf minimal abfällt. Genau an diesem Punkt beginnt das Haltemittel 10, hier also die Reißnaht 11, sich zu lösen und damit auch die kinetische Energie der Dekompressionsklappe 5 zu absorbieren. Das Lösen der Reißnaht 11 dauert über das gesamte Zeitintervall b an, bis sich am Ende des Zeitintervalls b die Schlaufe 8 vorzugsweise vollständig gelöst hat und die Energieabsorptionseinrichtung 7 keine absorbierende Wirkung mehr hat. Es ist zu erkennen, dass dadurch im Zeitintervall b die maximal an dem ersten Verbindungsmittel 14 wirkende Zugkraft Fₘₐₓ auf einen Wert von etwa 2,3 kN begrenzt werden kann. In dem Zeitintervall b wird damit auch die Geschwindigkeit der Lösebewegung reduziert. Wegen der am Ende des Zeitintervalls b nicht mehr vorhandenen Schlaufe 8 folgt im sich daran anschließenden Intervall c eine Art Schwingungsverlauf der Kraft F, bei der die Energieabsorption im Wesentlichen durch die Deformation des Gurtbandes 9 erfolgt. Dieser Effekt findet zwar auch in dem Zeitintervall b statt, wird allerdings von der Energieabsorption mittels der Reißnaht 11 überlagert.

Fig. 6 zeigt die gleiche Art von Diagramm wie Fig. 5 für eine andere Reißnahtgeometrie und bei einer Parallelschaltung der Energieabsorptionseinrichtungen 7. Das Lösen der Dekompressionsklappe 5 wurde hierbei durch den gleichen Differenzdruck |p₂-p₁| ausgelöst wie bei dem in Fig. 5 gezeigten Kraftverlauf. Die Reißnaht 11 ist dabei so ausgeführt, dass die energieabsorbierende Wirkung früher einsetzt und das Zeitintervall a' damit kürzer ist. Dennoch ist das Zeitintervall a' lang genug, dass ein ausreichend schneller Abbau des Differenzdrucks |p₂-p₁| möglich ist. Weiter ist das Zeitintervall b' länger als in dem Kraftverlauf aus Fig. 5. Dies kann beispielsweise über eine größere Erstreckung d der Reißnaht 11 in Längsrichtung des Gurtbandes 9 erfolgen oder durch eine insgesamt längere Reißnaht. Durch die Energieabsorption über ein längeres Zeitintervall b' kann auch die maximale Zugkraft Fₘₐₓ auf einen Wert von etwa 1,75 kN reduziert werden. Wie auch in Fig. 5 schließt sich daran ein Zeitintervall c' an, in dem ein schwingender Kraftverlauf zu beobachten ist.

Durch das Bestimmen der maximalen Kraft Fₘₐₓ über die Reißnahtgeometrie ist es nun möglich, die Energieabsorptionseinrichtung 7 und damit die Sicherungseinrichtung 6 an die maximal zulässige Beanspruchbarkeit des ersten und/oder des zweiten Verbindungsmittels 14 und/oder 15 anzupassen.

In den Fig. 5 und Fig. 6 ist im Zeitintervall b und b' jeweils mindestens ein schlagartiger Abfall der Zugkraft F zu erkennen. Die Ursache hierfür ist, dass die Reißnaht 11 vorzugsweise unterbrochen sein kann, so dass die übereinanderliegenden Lagen des Gurtbandes 9 in Teilabschnitten durch eine Reißnaht 11 verbunden sind. An der Stelle zwischen zwei Reißnähten 11 kann somit auch keine Energieabsorption erfolgen, und es kommt zu einem kurzzeitigen Abfall der Zugkraft F. In dem Beispiel aus Fig. 6 ist jedes Gurtband durch vier Teilabschnitte mit Reißnähten 11 zusammengehalten. Die Energieabsorptionseinrichtung 7 ist aber vorzugsweise derart eingerichtet, dass die Reißnaht 11 nicht vollständig aufreißt, was erklärt, warum in der Fig. 6 nur zwei Kraftabfälle in dem Zeitintervall b' erkennbar sind.

## Patentansprüche

1. Vorrichtung zum Ausgleichen einer Druckdifferenz für ein Luftfahrzeug, umfassend
- eine flächige, flugzeugfeste Trennwand (1), die einen ersten Raum (2) strömungstechnisch von einem zweiten Raum (3) trennt, wobei
- die Trennwand (1) eine den ersten und zweiten Raum (2,3) strömungstechnisch verbindende Strömungsöffnung (4) aufweist, und
- eine die Strömungsöffnung (4) verschließende Dekompressionsklappe (5), wobei
- eine Befestigung der Dekompressionsklappe (5) an der Trennwand (1) dazu eingerichtet ist, eine Lösebewegung der Dekompressionsklappe (5) bei Überschreiten eines vorbestimmten Druckgradienten zwischen dem ersten und zweiten Raum (2,3) freizugegeben, so dass eine strömungstechnische Verbindung zwischen dem ersten und dem zweiten Raum (2,3) besteht,
- wobei eine die Lösebewegung der Dekompressionsklappe (5) begrenzende Sicherungseinrichtung (6) vorgesehen ist,
- wobei die Sicherungseinrichtung (6) eine Energieabsorptionseinrichtung (7) umfasst,
**dadurch gekennzeichnet, dass**
- die Sicherungseinrichtung (6) ein Gurtband (9) umfasst,
- wobei die Energieabsorptionsvorrichtung (7) durch eine Schlaufe (8) gebildet ist, die durch ein Haltemittel (10) gehalten ist, wobei
- das Haltemittel (10) dazu eingerichtet ist, die Schlaufe (8) bei einem Überschreiten einer vordefinierten Zugkraft an dem Gurtband (9) freizugeben.

2. Vorrichtung nach Anspruch 1, **dadurch gekennzeichnet, dass** die Sicherungseinrichtung (6) dazu eingerichtet ist, dass
- die Energieabsorptionseinrichtung (7) erst dann energieabsorbierend wirkt, wenn die Dekompressionsklappe (5) wenigstens einen Strömungsquerschnitt freigibt, der zumindest 10 % der Fläche der Strömungsöffnung (4) aufweist.

3. Vorrichtung nach Anspruch 1 oder 2, **dadurch gekennzeichnet, dass**
- das Haltemittel (10) dazu eingerichtet ist, während der Lösebewegung Energie zu absorbieren.

4. Vorrichtung nach einem der vorangehenden Ansprüche, **dadurch gekennzeichnet, dass**
- das Haltemittel (10) durch eine Reißnaht (11) gebildet ist, die zum Schaffen der Schlaufe (8) wenigstens zwei Abschnitte (12,13) des Gurtbandes (9) miteinander verbindet.

5. Vorrichtung nach Anspruch 4, **dadurch gekennzeichnet, dass**
- die Reißnaht (11) die Abschnitte (12,13) über eine Erstreckung (d) längs des Gurtbandes (9) miteinander verbindet.

6. Vorrichtung nach Anspruch 4 oder 5, **dadurch gekennzeichnet, dass**
- der Verlauf der Reißnaht (11) über ihre Erstreckung (d) längs des Gurtbandes (9) zur Steuerung der Energieabsorptionscharakteristik individuell ausgelegt ist.

7. Vorrichtung nach einem der Ansprüche 4 bis 6, **dadurch gekennzeichnet, dass**
- eine Erstreckung (d) der Reißnaht (11) in Längsrichtung des Gurtbandes (9) einen geringeren Anteil aufweist als in eine Richtung orthogonal zu der Längsrichtung des Gurtbandes (9).

## Claims

1. Device for equalizing a pressure difference for an aircraft, comprising
- a planar partition wall (1) which is fixed to the aircraft and separates a first space (2) from a second space (3) in respect of flow, wherein
- the partition wall (1) exhibits a flow opening (4) which connects the first and second spaces (2, 3) in respect of flow, and
- a decompression flap (5) which closes the flow opening (4), wherein
- an attachment of the decompression flap (5) to the partition wall (1) is designed to allow a detachment motion of the decompression flap (5) when a predetermined pressure gradient between the first and second spaces (2, 3) is exceeded, such that a flow connection exists between the first and the second spaces (2, 3),
- wherein a safety device (6) is provided that limits the detachment motion of the decompression flap (5),
- wherein the safety device (6) comprises an energy absorption device (7), **characterised in that**
- the safety device (6) comprises a webbing (9),
- wherein the energy absorption device (7) is provided by means of a loop (8) held by a retaining means (10), wherein
- the retaining means (10) is designed to release the loop (8) in the event that a predefined tensile force on the webbing (9) is exceeded.

2. Device according to claim 1, **characterised in that** the safety device (6) is designed such that
- the energy absorption device (7) only acts in an energy-absorbing manner when the decompression flap (5) releases at least a flow cross-section representing at least 10% of the area of the flow opening (4).

3. Device according to claim 1 or 2, **characterised in that**
- the retaining means (10) is designed to absorb energy during the detachment motion.

4. Device according to any one of the preceding claims, **characterised in that**
- the retaining means (10) is provided by means of a tear seam (11) which interconnects the at least two portions (12,13) of the webbing (9) in order to create the loop (8).

5. Device according to claim 4, **characterised in that**
- the tear seam (11) interconnects the portions (12,13) over an extent (d) along the webbing (9).

6. Device according to claim 4 or 5, **characterised in that**
- the path taken by the tear seam (11) over its extent (d) along the webbing (9) is designed individually for controlling the energy absorption characteristics.

7. Device according to any one of claims 4 to 6, **characterised in that**
- an extent (d) of the tear seam (11) in the longitudinal direction of the webbing (9) comprises a smaller portion than when oriented at right angles to the longitudinal direction of the webbing (9).

## Revendications

1. Dispositif permettant de compenser une différence de pression pour un aéronef, comprenant
- une paroi de séparation (1) plate, fixée à l'aéronef, laquelle sépare fluidiquement un premier espace (2) d'un deuxième espace (3), dans lequel
- la paroi de séparation (1) comporte une ouverture d'écoulement (4) reliant fluidiquement le premier et le deuxième espace (2, 3), et
- un clapet de décompression (5) fermant l'ouverture d'écoulement (4), dans lequel
- une fixation du clapet de décompression (5) à la paroi de séparation (1) est disposée de façon à libérer un mouvement de desserrage du clapet de décompression (5) lorsqu'un gradient de pression prédéterminé entre le premier et le deuxième espace (2, 3) est excédé, de sorte qu'il existe une liaison fluidique entre le premier et le deuxième espace (2, 3),
- dans lequel un moyen d'arrêt (6) délimitant le mouvement de desserrage du clapet de décompression (5) est prévu,
- dans lequel le moyen d'arrêt (6) comprend un moyen d'absorption d'énergie (7),
**caractérisé en ce que**
- le moyen d'arrêt (6) comprend une sangle (9),
- dans lequel le moyen d'absorption d'énergie (7) est formé par une boucle (8), laquelle est maintenue par un moyen de maintien (10), dans lequel
- le moyen de maintien (10) est disposé de façon à libérer la boucle (8) lorsqu'une force de traction prédéfinie sur la sangle (9) est excédée.

2. Dispositif selon la revendication 1, **caractérisé en ce que** le moyen d'arrêt (6) est disposé de telle sorte que
- le moyen d'absorption d'énergie (7) n'opère en absorption d'énergie que lorsque le clapet de décompression (5) libère au moins une section transversale d'écoulement valant au moins 10 % de la surface de l'ouverture d'écoulement (4).

3. Dispositif selon la revendication 1 ou 2, **caractérisé en ce que**
- le moyen de maintien (10) est disposé de façon à absorber de l'énergie pendant le mouvement de desserrage.

4. Dispositif selon l'une des revendications précédentes, **caractérisé en ce que**
- le moyen de maintien (10) est formé par une couture de déchirement (11), laquelle relie l'une à l'autre au moins deux sections (12, 13) de la sangle (9) pour créer la boucle (8).

5. Dispositif selon la revendication 4, **caractérisé en ce que**
- la couture de déchirement (11) relie l'une à l'autre les sections (12, 13) sur une étendue (d) le long de la sangle (9).

6. Dispositif selon la revendication 4 ou 5, **caractérisé en ce que**
- le parcours de la couture de déchirement (11) est conçu individuellement sur son étendue (d) le long de la sangle (9) pour la maîtrise de la caractéristique d'absorption d'énergie.

7. Dispositif selon l'une des revendications 4 à 6, **caractérisé en ce que**
- une étendue (d) de la couture de déchirement (11) dans la direction longitudinale de la sangle (9) possède une proportion inférieure par rapport à une direction orthogonale à la direction longitudinale de la sangle (9).
